Europäisches Patentamt

European Patent Office

Office européen des brevets

(11) Publication number: **0 166 915**
**B1**

## (12) EUROPEAN PATENT SPECIFICATION

(45) Date of publication of patent specification: **05.09.90**

(21) Application number: **85105588.9**

(22) Date of filing: **07.05.85**

(51) Int. Cl.⁵: **H 04 L 12/28,** H 04 B 1/74,
H 03 K 5/26, G 06 F 13/14

(54) Communication system.

(30) Priority: **09.05.84 JP 93668/84**

(43) Date of publication of application:
**08.01.86 Bulletin 86/02**

(45) Publication of the grant of the patent:
**05.09.90 Bulletin 90/36**

(84) Designated Contracting States:
**DE FR GB SE**

(56) References cited:
**EP-A-0 093 578**
**US-A-4 403 192**
**US-A-4 428 046**

**ADVANCES IN INSTRUMENTATION, vol. 37,
part 3, pages 1565-1570, ISA, Research Triangle
Park, NC, US; S.M. HERB: "Using an optical
highway for distributed architecture of
industrial control systems"**

**PATENTS ABSTRACTS OF JAPAN, vol. 7, no.
218 (E-200) 1363r, 28th September 1983; & JP -
A - 58 111 433**

(73) Proprietor: **ASICS Corporation
1-3, 3-chome, Terada-cho Suma-ku
Kobe-shi (JP)**

(72) Inventor: **Teranishi, Mitsuji
5-64, Fukumanji-cho
Yao-shi Osaka-fu (JP)**
Inventor: **Watanabe, Yasuo
G-105, 20, 1-chome Minami-Kasugaoka
Ibaragi-shi Osaka-fu (JP)**
Inventor: **Takeuchi, Akira
C-303, 19, Mihogaoka
Ibaragi-shi Osaka-fu (JP)**

(74) Representative: **Betten, Jürgen, Dipl.-Ing. et al
Patentanwälte Betten & Resch
Reichenbachstrasse 19
D-8000 München 5 (DE)**

Courier Press, Leamington Spa, England.

## Description

The present invention relates to communication system comprising a plurality of devices interconnected into a loop by a transmission line, each of the devices being provided with two pairs of sending and receiving terminals for transmitting signals in directions different from each other, each of the devices being connected to the other devices immediately adjacent thereto on the loop by a pair of transmission channels, serving as said transmission line and connected to the two pairs of sending and receiving terminals respectively, each of the transmission channels having a sending line and a receiving line.

The present invention relates further to a first arrival preference circuit according to claims 4 and 5 in a communication system.

There are various connection systems for conducting serial data transmissions between a plurality of devices, especially between programmable devices incorporating a CPU. These systems have their own merits and demerits. Typical of such connection systems are as follows.

With the star connection system, a plurality of devices are each connected to a central device by a specific transmission line. Although having the advantage that the delay in data transmissions is small, this system has the drawbacks that the transmission line has a large overall length and that the entire system fails when the central device malfunctions.

Such a star connection is known from US-A-4,428,046 showing a star coupler with connection circuitry in a data processing system having a plurality of subsystems linked by the star coupler. The star coupler merely has a function that an input signal can pass through the star coupler. That is, the star coupler comprises tri-state gates and connection circuitry for controlling the tri-state gates so that at any given time no more than one selected subsystem can pass a message through the star coupler. The priority encode circuit in the connection circuitry is used to determine the selected one of the subsystems.

In the daisy chain connection system, a plurality of devices are connected together in series. This system can be small in the overall length of the transmission line, but if an intermediate device malfunctions or the transmission line is broken at an intermediate portion, there arises the problem that the devices at opposite sides of the faulty device or portion become unable to communicate with each other.

The loop (or link) connection system, which is free of the above problems, has the advantage that there is a line bypassing an intermediate portion of malfunction. However, the system, which is generally unidirectional, still has the problem that the sending terminal and the receiving terminal need to be changed over by a fairly complex control device.

Such a loop connection system is disclosed in EP-A-93578.

The so-called bus connection system also has the problem that if the bus line is broken at an intermediate portion, blocked communication will result.

With the ring bus connection system, all devices are capable of communicating with one another even if the ring bus line is broken, provided that the failure is limited to a single location.

Nevertheless, the bus connection system, even when in the form of a ring bus connection system, has the fatal drawback that it is not amenable to light communication. Light communication systems have found wide use in recent years because of various advantages. For example, they are operable satisfactorily in the presence of noises electromagnetically induced, and they have large transmission capacities. However, light communication systems can not be replaced by electrical communication systems in a simple fashion, for example, because of the problem of optical branch devices. Although already made available, such devices are presently expensive. With the bus connection system, each of the devices connected together requires an optical branch device. Further because the optical signal transmitted through the bus line is partly divided at the connection between the bus line and each device, the optical signal to be transmitted through the bus line needs to have a considerably great power.

The main object of the present invention starts from a communication system which has the feature of the ring bus connection system and which nevertheless is usable also for light communication relatively easily (e.g. EP-A-93578).

The present invention provides a communication system comprising a plurality of devices interconnected into a loop by a transmission line, each of the devices being provided with two pairs of sending and receiving terminals for transmitting signals in directions different from each other, each of the devices being connected to the other devices immediately adjacent thereto on the loop by a pair of transmission channels, serving as said transmission line and connected to the two pairs of sending and receiving terminals respectively, each of the transmission channels having a sending line and a receiving line.

This communication system is characterized in that each of the devices is provided with a preference circuit comprising: a first arrival discrimination circuit having three input terminals and a signal output terminal providing a signal responsive to signals at said three input terminals wherein said first and second input terminals are connected, respectively, to said two receiving terminals; a first flip-flop having an input connected to a first of said two receiving terminals; a second flip-flop having an input coupled to said signal output terminal of said first arrival discrimination circuit; an or gate coupled to outputs of said first and second flip-flops; and third and fourth flip-flops having inputs connected, respectively, to outputs of said first and second flip-flops, an inverting output ($\overline{Q}$) of said third flip-flop resetting said second flip-flop and an inverting output ($\overline{Q}$) of said fourth flip-flop resetting said first flip-flop and connected to said third input terminal of said first arrival discrimination circuit; an output of said or gate providing an output signal (i) from said first arrival preference circuit.

One of the plurality of devices may serve as a central device which takes the initiative in communicating with the other devices, all the different devices may have different orders of preference in communication, or all devices may be given equal rights to communicate. The communication system may be either of the half-duplex type or full-duplex type.

With the known communication system, each device is provided with two pairs of sending and receiving terminals, and the same data is transmitted via the transmission channels in the form of a loop in two directions at the same time. Accordingly, even if the transmission channel is broken at one portion, all the devices are still in communication with one another. Further when optical fiber is used as the transmission line, opto/electric and electro/optic conversion circuits need only to be used without the necessity of optical branch or dividing devices. Thus, the present system is readily applicable also to light communication. Further because the opto/electric and electro/optic conversion circuits provided for each device serve as optical relay devices, there is no need to consider optical transmission losses even if the optical fiber used is considerably large in the overall length.

When the present system is used for light communication, each device has an electro/optic conversion circuit provided for each sending terminal thereof and an opto/electric conversion circuit provided for each receiving terminal thereof. Preferably, the output side of the opto/electric conversion circuit of each pair is electrically connected to the input side of the electro/optic conversion circuit of the other pair.

When the present system is used for electrical communication, it is also preferable that the output side of each receiving terminal be connected directly or via an amplifier circuit or the like to the sending terminal of the other pair.

The two receiving terminals of each device receive the same signal, so that the device may accept the signal as an incoming signal via only one of the terminals. Most simply, a mere change-over circuit may serve this purpose. Alternatively (cf. EP-A-93578, earlier one of the two signals of the same kind received by the two terminals may be selected by a preference circuit.

The present invention further provides a first arrival preference circuit which is described in claims 4 and 5

Fig. 1 is a block diagram showing a communication system for a plurality of devices;

Fig. 2 is a block diagram showing a communication control unit

Fig. 3 is a block diagram showing a first arrival preference circuit; and

Fig. 4 is a time chart showing the operation of the preference circuit.

The present invention will be described in detail with reference to an embodiment wherein optical fiber is used for communication lines. The full-duplex system is used for the light communication system.

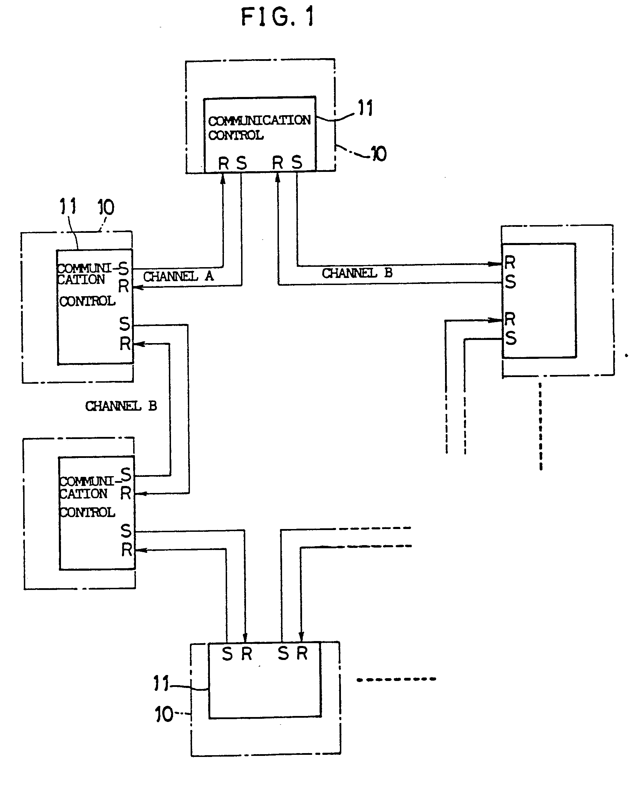

With reference to Fig. 1, a plurality of devices 10 are interconnected into a loop by optical communication lines. Each device 10 includes a communication control unit 11 having two pairs of sending and receiving terminals S and R, to which a pair of transmission channels A and B is connected. Each transmission channel A or B has a sending line and a receiving line. Each device 10 on the communication loop is connected to other devices 10 immediately adjacent thereto. One of the plurality of devices 10 may serve as a central device (to be referred to as such for the sake of convenience). In this case, a polling selecting system can be used wherein the central device takes the initiative in communication. Of course, equal communication rights may be given to the devices 10, or a suitable order of preference can be predetermined for these devices to perform communication.

In any case, the same message (data) is transmitted through the transmission channels A and B at all times. Since the same message is thus transmitted through the pair of transmission channels A and B, each device 10 or the central device can communicate with all the other devices 10 even when a failure occurred at one portion of the transmission channel. Further even if one of the communication control units 11 malfunctioned, all the devices 10 other than the one with the faulty unit 11 can normally perform communication with one another or with the central device. Further while devices 10 are communicating with each other or while the central device is communicating with other device, the desired device 10 or the transmission channel can be repaired, or it is possible to remove the desired device 10 from the loop or to incorporate a new device 10 into the loop.

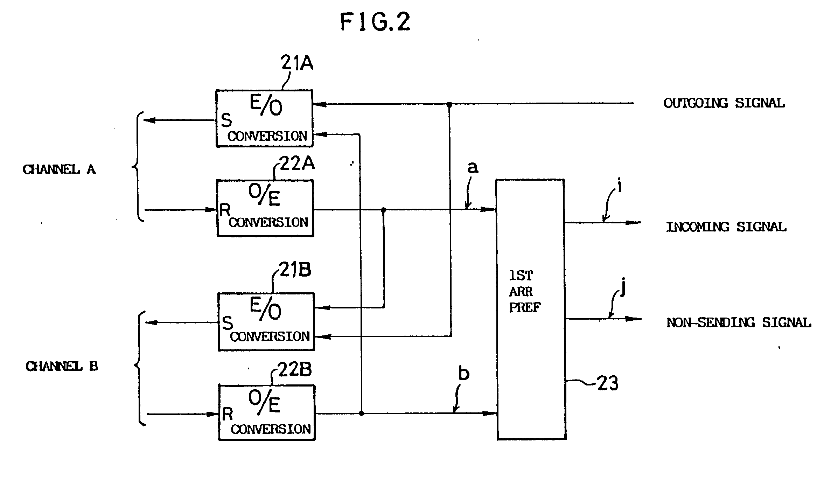

Fig. 2 schematically shows the construction of the communication control unit 11. While the same message is transmitted through the pair of transmission channels A and B at all times, there is generally a slight time delay between the time when the message through the channel A arrives at the unit 11 and the time when the message through the channel B reaches the unit, so that the message data is likely to change if the two messages are superposed simply. To avoid this problem, the communication control unit 11 is provided with a first arrival preference (1ST ARR PREF) circuit 23, which will be described in detail later.

The outgoing signal (message) from the CPU or the like of the device 10 is fed to electro/optic (E/O) conversion circuits 21A, 21B, in which the signal is converted to an optical signal, which is then sent out through the sending lines of the channels A, B at the same time.

The optical signal fed to an opto-electric (O/E) conversion circuit 22A is converted to an electric signal, which is sent to the first arrival preference circuit 23 and to the E/O conversion circuit 21B of the channel B. From the circuit 21B, the signal as converted to an optical signal is sent out through the sending line of the channel B. Further when an optical signal is received by an O/E conversion circuit 22B of the channel B, the signal is converted to an electric signal and sent to the preference circuit 23. The electric signal is also sent to the E/O conversion circuit 21A, from which it is sent out as converted to an optical signal through the sending line of the channel A. In this way, the signal received from the channel A is immediately sent out through the sending line of the channel B, while the signal received via the channel B is immediately sent out via the sending line of the channel A to realize duplex loop communication. Since the received optical signal is converted to an electric signal, which is sent out via the sending line upon conversion to an optical signal, the O/E and E/O conversion circuits serve as intermediate or relay devices, with the result that there is no need to consider the problem of attenuation due to the optical fiber of optical signals even if the loop communication lines have a large overall length. Further even if the preference circuit 23 malfunctioned, the signal received by the O/E conversion circuit is fed to the E/O conversion circuit and sent out to the sending line. Thus, the communication through the loop will not be interrupted.

When signals are received by the preference circuit 23 via the O/E conversion circuits 22A, 22B, the circuit 23 determines which of the signals is the first to arrive, whereupon the circuit 23 delivers the earlier signal as the incoming signal i. The delayed signal is prohibited from passing through the circuit 23. While receiving signals, the preference circuit 23 emits a non-sending signal j, which is sent to the CPU of the device 10. Thus, while receiving this signal j, the CPU stops transmission of outgoing signals. This is due to the following reason. The outgoing signal is fed to the E/O conversion circuits 21A, 21B as stated above, so that when there is an incoming signal from the O/E conversion circuits 22A, 22B to the circuits 21A, 21B, the outgoing signal would be superposed on the incoming signal. It will become apparent later than when signals are fed to the O/E conversion circuits 22A, 22B at the same time, the signal through the channel A is given preference.

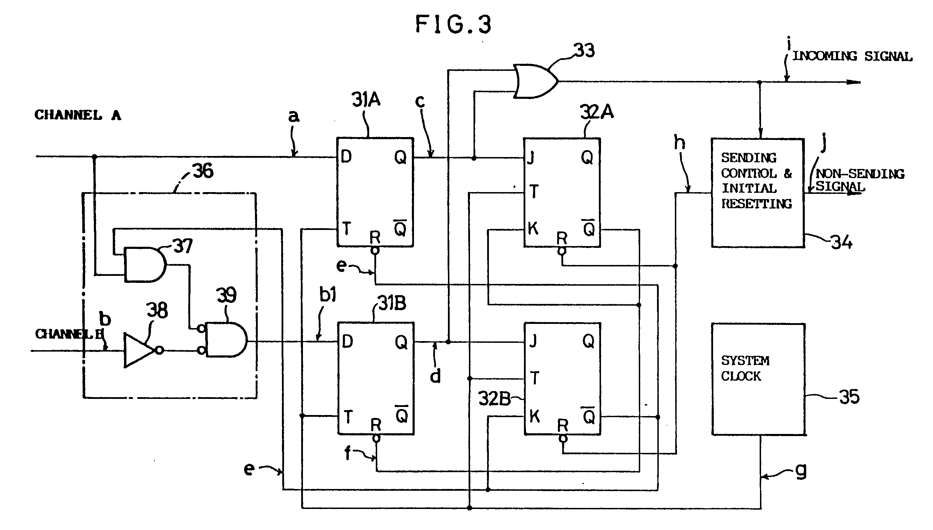

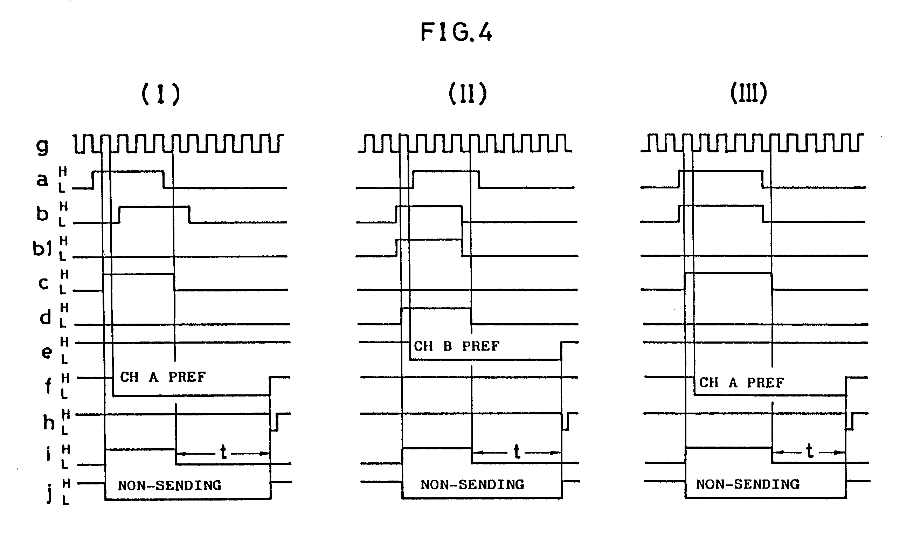

Fig. 3 shows the first arrival preference circuit 23 in detail, and Fig. 4 shows the operation thereof. With reference to Fig. 3, the output signal a of the O/E conversion circuit 22A on the channel A is fed to a data input terminal D of a D flip-flop (gate circuit) 31A and also to a first arrival discrimination circuit 36. The output signal of the O/E conversion circuit 22B on the channel B is fed via the circuit 36 to a D flip-flop (gate circuit) 31B as a signal b1. The output signals (non-inverted signals) c and d from these D flip-flops 31A, 31B are applied to an OR circuit 33, affording an incoming signal i. As will be described later, the output signals c and d are not produced at the same time. When the input of the signal b is earlier than that of the signal a by at least one period of clock pulse g, the first arrival discrimination circuit 36 permits passage of the signal b but otherwise forbids the passage of the signal b.

The D flip-flops 31A, 31B are controlled by JK flip-flops (gate control circuits) 32B, 32A. The output signals c, d of the D flip-flops 31A, 31B are fed also to input terminals J of the JK flip-flops 32A, 32B, respectively. An inverted output $\overline{Q}$ from the JK flip-flop 32A is sent to a forced reset terminal R of the D flip-flop 31B, and an inverted output $\overline{Q}$ from the JK flip-flop 32B to a forced reset terminal R of the D flip-flop 31A. Usually these D flip-flops 31A, 31B are in condition to pass the input signals a and b1 respectively in timed relation to the clock pulse g given to clock input terminals T. However, when the JK flip-flop 32A is set by the input signal c, the inverted output $\overline{Q}$ is at L level, forcibly resetting the D flip-flop 31B to forbid the passage of the input signal b1. Conversely, if the JK flip-flop 32B is set by the input signal b1 the inverted output $\overline{Q}$ thereof, which is at L level, forcibly resets the D flip-flop 31A to forbid passage of the input a.

A sending control and initial resetting circuit 34 has two functions. The circuit 34, receiving the input signal i, counts a specified period of time t upon discontinuance of input of the incoming signal i. Upon lapse of the time t without receiving the signal i, the circuit 34 produces an initial resetting pulse h at L level, whereby the JK flip-flops 32A, 32B are forcibly reset. Further after the receipt of the incoming signal i until the lapse of the specified period of time t, the circuit 34 produces a non-sending signal j at L level. A system clock pulse generator circuit 35 produces a series of clock pulses g, which are fed to the clock input terminals T of the D flip-flops 31A, 31B and the JK flip-flops 32A, 32B.

In Fig. 4, the period of clock pulses g is shown as considerably enlarged. The signals a, b, b1, c, d and i, although actually inverted repeatedly according to the data which the signal represents, are shown all at H level. Fig. 4 (I) shows the case wherein the signal a via the channel A has arrived earlier than the signal b via the channel B. Fig. 4 (II) shows the case wherein the signal b has arrived earlier than the signal a, and Fig. 4 (III) shows the case in which the two signals a and b arrived at the same time.

The output signal e of the inverted output terminal $\overline{Q}$ of the JK flip-flop 32B is fed to one input terminal of an AND circuit 37 included in the first arrival discrimination circuit 36, while the signal a is fed to the other input terminal of the AND circuit 37. The output of the AND circuit 37 is led to one input terminal of NAND circuit 39, to the other input terminal of which is fed the signal b from the channel B as inverted by a NOT circuit 38. With the JK flip-flop 32B reset in the initial state, the signal e is at H level. Accordingly, in response to the signal a (H level) received, the AND circuit 37 produces an output at H level, which is given to one input terminal of the NAND circuit 39, with the result that the NAND circuit 39 closes its gate to forbid passage of the signal b. Thus, when the signal a arrives at the same time as, or earlier than, the signal b, the signal b is unable to pass through the first arrival discrimination circuit 36 (Figs. 4 (I) and (III), especially Fig. 4 (III)).

When the signal a is fed to the D flip-flop 31A, the signal a passes through the D flip-flop 31A (as signal c) and further through the OR circuit 33 with the rise of the clock pulse g, giving an incoming signal i. The signal c is also fed to the input terminal J of the JK flip-flop 32A. With the fall of the clock pulse g, the JK flip-flop 32A is set, producing an inverted output $\overline{Q}$ at L level. Since the L level signal is fed back to an input terminal K of the JK flip-flop 32A, the JK flip-flop 32A remains in set state.

The L level signal f from the inverted output terminal $\overline{Q}$ of the JK flip-flop 32A is given to the forced resetting terminal R of the D flip-flop 31B to forcibly reset the D flip-flop 31B. Consequently, the output d from the non-inverted output terminal $\overline{Q}$ of the D flip-flop 31B is held at L level, and the JK flip-flop 32B is held also in reset state. While the input of signal a is present, the gate of the NAND circuit 39 remains closed. Because the signal f is held at L level until the JK flip-flop 32A is initially reset by the initial resetting circuit 34, the D flip-flop 31B will not be set even if the signal a is discontinued, opening the gate of the NAND circuit 39 and permitting the signal b to pass through the circuit 39 (as signal b1). The signal f is a channel A preference (CH A PREF) signal for preventing the signal b1 via the channel B from passing through the D flip-flop 31B (see Figs. 4 (I) and (III)).

When the signal b has arrived at the first arrival discrimination circuit 36 before the signal a, the input signal a of the AND circuit 37 is at L level even if the other input signal e is at H level, so that the output of the AND circuit 37 is at L level, permitting the NAND circuit 39 to pass the signal b therethrough. The signal b is inverted by the NOT circuit 38 and further inverted by the NAND circuit 39, with the result that the output signal b1 from the NAND circuit 39 is of the same form as the signal b. The signal b1 fed to the data input terminal D of the D flip-flop 31B passes through the flip-flop 31B with the rise of clock pulse g, giving a signal d, which passes through the OR circuit 33 to become an incoming signal i. The signal d is fed also to the input terminal J of the JK flip-flop 32B, setting this flip-flop 32B upon the fall of clock pulse g. The inverted output terminal $\overline{Q}$ of the JK flip-flop 32B feeds out an output e at L level, which is fed to the forced resetting terminal R of the D flip-flop 31A. Consequently, the D flip-flop 31A remains reset even if a signal a is given, preventing passage of the input signal a through the D flip-flop 31A. The signal e is a channel B preference (CH B PREF) signal (see Fig. 4 (II)).

When the JK flip-flop 32B is set with the signal e changed to L level, the output of the AND circuit 37 remains at L level irrespective of the presence or absence of the signal a. Consequently the gate of the NAND circuit 39 remains open, permitting passage of the input signal b through the NAND circuit 39.

The signal b may arrive slightly earlier than the signal a, but if a clock pulse g does not rise and fall during this time difference, the gate of the NAND circuit 39 is closed by the signal a before the channel B preference signal (L level) e is fed out. The signal a from the channel A therefore proceeds in preference.

## Claims

1. A communication system comprising a plurality of devices (10) interconnected into a loop by a transmission line, each of the devices being provided with two pairs of sending and receiving terminals (S, R) for transmitting signals in directions different from each other, each of the devices being connected to the other devices immediately adjacent thereto on the loop by a pair of transmission channels (A, B) serving as said transmission line and connected to the two pairs of sending and receiving terminals respectively, each of the transmission channels having a sending line and receiving line characterized in that each of the devices is provided with a preference circuit (23) comprising:

a first arrival discrimination circuit (36) having three input terminals and a signal output terminal providing a signal responsive to signals at said three input terminals wherein said first and second input terminals are connected, respectively, to said two receiving terminals;

a first flip-flop (31A) having an input connected to a first of said two receiving terminals;

a second flip-flop (31B) having an input coupled to said signal output terminal of said first arrival discrimination circuit;

an OR gate (33) coupled to outputs of said first and second flip-flops (31A, 318); and

third and fourth flip-flops (32A, 32B) having inputs connected, respectively, to outputs of said first and second flip-flops (31A, 31B), an inverting output ($\overline{Q}$) of said third flip-flop (32A) resetting said second flip-flop (31B) and an inverting output ($\overline{Q}$) of said fourth flip-flop (32B) resetting said first flip-flop (31A) and connected to said third input terminal of said first arrival discrimination circuit (36);

an output of said OR gate providing an output signal (i) from said first arrival preference circuit (23).

2. A communication system as defined in claim 1 wherein said first arrival discrimination circuit (36) comprises:

a first AND gate (37) having one input connected to said first input terminal and the other input connected to said third input terminal of the first arrival discrimination circuit (36);

an inverter (38) having an input connected to said second input terminal of the first arrival discrimination circuit (36);

a second AND gate (39) having a first inverting input connected to an output of said first AND gate (37) and having a second inverting input connected to an output of said inverter (38) and having an output connected to said output terminal of said first arrival discrimination circuit (36).

3. A communication system as defined in one of claims 1 or 2, wherein the sending and receiving lines are optical fibres, and each of the devices has an electro/optic conversion circuit (21A, 21B) provided for each sending terminal thereof and an opto/electric conversion circuit (22A, 22B) provided for each receiving terminal thereof, the output side of the opto/electric conversion circuit of each pair being electrically connected to the input side of the electro/optic conversion circuit of the other pair.

4. A first arrival preference circuit (23) comprising a gate circuit (31A, 31B) connected to each of two input terminals; a first arrival discrimination circuit (36) for discriminating which one of the input signals has arrived first to the two input terminals and for determining that the input signals have arrived to the two input terminals at the same time; a gate control circuit (32A, 32B) for enabling the gate circuit (31A, 31B, 33) for the terminal where the first signal has arrived or for a predetermined one of said terminals when the two input signals have arrived at the same time and disabling the other gate circuit characterized in that the circuit comprises:

a first arrival discrimination circuit (36) having three input terminals and a signal output terminal providing a signal responsive to signals at said three input terminals wherein said first and second input terminals are connected, respectively, to said two receiving terminals;

a first flip-flop (31A) having an input connected to a first of said two receiving terminals;

a second flip-flop (31B) having an input coupled to said signal output terminal of said first arrival discrimination circuit;

an OR gate (33) coupled to outputs of said first and second flip-flops (31A, 31B); and

third and fourth flip-flops (32A, 32B) having inputs connected, respectively, to outputs of said first and second flip-flops (31A, 31B), an inverting output ($\overline{Q}$) of said third flip-flop (32A) resetting said second flip-flop (31B) and an inverting output ($\overline{Q}$) of said forth flip-flop (32B) resetting said first flip-flop (31A) and connected to said third input terminal of said first arrival discrimination circuit (36);

an output of said OR gate providing an output signal (i) from said first arrival preference circuit (23).

5. A first arrival preference circuit (23) as defined in claim 4 wherein said first arrival discrimination circuit (36) comprises:

a first AND gate (37) having one input connected to said first input terminal and the other input connected to said third input terminal of the first arrival discrimination circuit (36);

an inverter (38) having an input connected to said second input terminal of the first arrival discrimination circuit (36);

a second AND gate (39) having a first inverting input connected to an output of said first AND gate (37) and having a second inverting input connected to an output of said inverter (38) and having an output connected to said output terminal of said first arrival discrimination circuit (36).

**Patentansprüche**

1. Kommunikationssystem bestehend aus mehreren Vorrichtungen (10), die durch eine Übertragungsleitung zu einer Schleife verbunden sind und wobei jede der Vorrichtungen zwei Paare von Sende- und Empfangsstationen (S, R) aufweist, um Signale in voneinander verschiedene Richtungen zu übermitteln, wobei jede der Vorrichtungen mit den unmittelbar in der Schleife benachbarten Vorrichtungen über ein Paar von Übertragungskanälen (A, B), die als die Übertragungsleitung dienen, und jeweils mit den beiden Paaren der Sende- und Empfangsstationen (S, R) verbunden sind, wobei jede der Übertragungskanäle eine Sende- und eine Empfangsleitung aufweist, dadurch gekennzeichnet, daß jede der Vorrichtungen mit einem Vorzugs-Schaltkreis (23) ausgerüstet ist, bestehend aus:

einem Erstankunfts-Unterscheidungs-Schaltkreis (36), der drei Eingangsleitungen und eine Signalausgangsleitung aufweist, die in Abhängigkeit von Signalen an den drei Eingangsleitungen ein Signal abgibt, wobei jeweils die erste und zweite Eingangsleitung mit den beiden Empfangsleitungen verbunden sind;

einem ersten Flip-Flop (31A) mit einem Eingang, der mit der ersten der beiden Empfangsleitungen verbunden ist;

einem zweiten Flip-Flop (31B) mit einem Eingang, der mit der Signal-Ausgangsleitung des Erstankunfts-Unterscheidungs-Schaltkreises gekoppelt ist;

einem OR-Gatter (33), das mit dem ersten und zweiten Flip-Flop (31A, 31B) gekoppelt ist; und

dritten und vierten Flip-Flops (32A, 32B) mit Eingängen, die jeweils verbunden sind mit den Ausgängen der ersten und zweiten Flip-Flops (31A, 31B), einem invertierenden Ausgang ($\overline{Q}$) des dritten Flip-Flops (32A), welcher den zweiten Flip-Flop (31B) zurücksetzt, und einem invertierenden Ausgang ($\overline{Q}$) des vierten Flip-Flops (32B), der den ersten Flip-Flop (31A) zurücksetzt und mit der dritten Eingangsleitung des Erstankunfts-Unterscheidungs-Schaltkreises (36) verbunden ist;

wobei ein Ausgang des OR-Gatters ein Ausgangs-Signal (i) des Erstankunfts-Vorzugs-Schaltkreises (23) liefert.

2. Kommunikationssystem nach Anspruch 1, in dem der Erstankunfts-Unterscheidungs-Schaltkreis (36) aufweist:

ein erstes AND-Gatter (37), dessen einer Eingang mit der ersten Eingangsleitung und dessen anderer Eingang mit der dritten Eingangsleitung des Erstankunfts-Unterscheidungs-Schaltkreises (36) verbunden ist;

einem Inverter (38), dessen Eingang mit der zweiten Eingangsleitung des Erstankunfts-Unterscheidungs-Schaltkreises (36) verbunden ist;

einem zweiten AND-Gatter (39), dessen erster invertierender Eingang mit einem Ausgang des ersten AND-Gatters (37) und dessen zweiter invertierender Eingang mit einem Ausgang des Inverters (38) und dessen Ausgang mit der Ausgangsleitung des Erstankunfts-Unterscheidungs-Schaltkreises (36) verbunden sind.

3. Kommunikationssystem nach einem der Ansprüche 1 oder 2, in dem die Sende- und Empfangsleitungen Lichtleiter sind und jede der Vorrichtungen einen Elektro/Opto-Umwandlungsschaltkreis (21A, 21B) für jede Sendestation und einen Opto/Elektro-Umwandlungsschaltkreis (22A, 22B) für jede Empfangsstation aufweist, wobei die Ausgangsseite des Opto/Elektro-Umwandlungsschaltkreises von jedem Paar elektrisch mit der Eingangsseite des Elektro/Opto-Umwandlungsschaltkreises des anderen Paares verbunden ist.

4. Erstankunfts-Vorzugs-Schaltkreis (23) mit einem Gatterschaltkreis (31A, 31B), der mit jeder der beiden Eingangsleitungen verbunden ist; einem Erstankunfts-Unterscheidungs-Schaltkreis (36) zur Unterscheidung, welches der Eingangssignale zuerst an den beiden Eingangsleitungen anlag und zur Bestimmung, daß die Eingangssignale an den beiden Eingangsleitungen zur gleichen Zeit angekommen sind; einem Gatter-Steuerungs-Schaltkreis (32A, 32B) zur Wirksammachung des Gatter-Schaltkreises (31A, 31B, 33) für die Leitung, an der das erste Signal angekommen ist, oder für eine vorbestimmte Leitung der Leitungen, wenn die beiden Eingangssignale zur gleichen Zeit angekommen sind, und zur Unwirksammachung des anderen Gatter-Schaltkreises, dadurch gekennzeichnet, daß der Schaltkreis aufweist:

einen Erstankunfts-Unterscheidungs-Schaltkreis (36) mit drei Eingangsleitungen und einer Signalausgangsleitung, die in Abhängigkeit von an den drei Eingangsleitungen anliegenden Signalen ein Signal liefert, wobei die ersten und zweiten Eingangsleitungen jeweils mit den beiden Empfangsstationen verbunden sind;

einen ersten Flip-Flop (31A), dessen Eingang mit einer ersten der beiden Empfangsstationen verbunden ist;

einen zweiten Flip-Flop (31B), dessen Eingang mit der Signalausgangsleitung des Erstankunfts-Unterscheidungs-Schaltkreises verbunden ist;

ein OR-Gatter (33), das mit Ausgängen des ersten und zweiten Flip-Flops (31A, 31B) gekoppelt ist; und dritte und vierte Flip-Flops (32A, 32B), deren Eingänge jeweils mit den Ausgängen der ersten und zweiten Flip-Flops (31A, 31B) verbunden sind, wobei ein invertierender Ausgang ($\overline{Q}$)

des dritten Flip-Flops (32A) den zweiten Flip-Flop (31B) zurücksetzt und ein invertierender Ausgang ($\overline{Q}$) des vierten Flip-Flops (32B) den ersten Flip-Flop (31A) zurücksetzt und mit der dritten Eingangsleitung des Erstankunfts-Unterscheidungs-Schaltkreises (36) verbunden ist;

wobei ein Ausgang des OR-Gatters ein Ausgangssignal (i) vom Erstankunfts-Vorzugs-Schaltkreis (23) liefert.

5. Erstankunfts-Vorzugs-Schaltkreis (23) nach Anspruch 4, wobei der Erstankunfts-Unterscheidungs-Schaltkreis (36) aufweist:

ein erstes AND-Gatter (37), dessen einer Eingang mit der ersten Eingangsleitung und dessen anderer Eingang mit der dritten Eingangsleitung des Erstankunfts-Unterscheidungs-Schaltkreises (36) verbunden sind;

einen Inverter (38), dessen Eingang mit der zweiten Eingangsleitung des Erstankunfts-Unterscheidungs-Schaltkreises (36) verbunden ist;

ein zweites AND-Gatter (39), dessen erster invertierender Eingang mit einem Ausgang des ersten AND-Gatters (37) und dessen zweiter invertierender Eingang mit einem Ausgang des Inverters (38) und dessen Ausgang mit der Ausgangsleitung des Erstankunfts-Unterscheidungs-Schaltkreises (36) verbunden sind.

**Revendications**

1. Un système de communication comportant une pluralité de dispositifs (10) interconnectés en boucle par une ligne de transmission, chacun des dispositifs comportant deux couples de bornes d'émission et de réception (S, R) servant à transmettre des signaux dans des directions différentes les unes des autres, chacun des dispositifs étant raccordé aux autres dispositifs, qui lui sont directement voisins dans la boucle, par un couple de canaux de transmission (A, B) constituant ladite ligne de transmission et raccordés respectivement aux deux couples de bornes d'émission et de réception, chacun des canaux de transmission possédant une ligne d'émission et une ligne de réception, caractérisé en ce que chacun des dispositifs comporte un circuit de préférence (23) comprenant

un circuit de discrimination du premier signal arrivé (36) comportant trois bornes d'entrée et une borne de sortie d'un signal, qui délivre un signal en réponse à des signaux présents auxdites trois bornes d'entrée, lesdites première et seconde bornes d'entrée étant raccordées respectivement auxdites deux bornes de réception;

une première bascule bistable (31A) comportant une entrée raccordée à une première desdites deux bornes de réception;

une seconde bascule bistable (31B) comportant une entrée accouplée à ladite borne de sortie du signal dudit circuit de discrimination du premier signal arrivé;

une porte OU (33) accouplée à des sorties desdites première et seconde bascules bistables (31A, 31B); et

des troisième et quatrième bascules bistables (32A, 32B) comportant des entrées raccordées respectivement à des sorties desdites première et seconde bascules bistables (31A, 31B), une sortie inverseuse (Q̄) de ladite troisième bascule bistable (32A) ramenant à l'état initial ladite seconde bascule bistable (31B) et une sortie inverseuse (Q̄) de ladite quatrième bascule bistable (32B) ramenant à l'état initial ladite première bascule bistable (31A) et étant raccordée à ladite troisième borne d'entrée dudit circuit de discrimination du premier signal arrivé (36);

une sortie de ladite porte OU délivrant un signal de sortie (i) arrivant dudit circuit de préférence du premier signal arrivé (23).

2. Un système de communication selon la revendication 1, dans lequel ledit circuit de discrimination du premier signal arrivé (36) comprend:

une première porte ET (37), dont une entrée est raccordée à ladite première borne d'entrée et dont l'autre entrée est raccordée à ladite troisième borne d'entrée du circuit de discrimination du premier signal arrivé (36);

un inverseur (38) comportant une entrée raccordée à ladite seconde borne d'entrée du circuit de discrimination du premier signal arrivé (36);

une seconde porte ET (39) comportant une première entrée inverseuse raccordée à une sortie de ladite première porte ET (37) et une seconde entrée inverseuse raccordée à une sortie dudit inverseur (38) et possédant une sortie raccordée à ladite borne de sortie dudit circuit de discrimination du premier signal arrivé (36).

3. Un système de communication selon l'une des revendications 1 ou 2, dans lequel les lignes d'émission et de réception sont des fibres optiques, et chacun des dispositifs possède un circuit de conversion électro-optique (21A, 21B), prévu pour chaque borne d'émission de ce circuit et un circuit de conversion opto-électrique (22A, 22B) prévu pour chaque borne de réception de ce circuit, le côté sortie du circuit de conversion opto-électrique de chaque couple étant raccordé électriquement au côté entrée du circuit de conversion électro-optique de l'autre couple.

4. Un circuit de préférence du premier signal arrivé (23) comportant un circuit de porte (31A, 31B) raccordé à chacune de deux bornes d'entrée; un circuit de discrimination du premier signal arrivé (36) servant à discriminer celui des signaux d'entrée, qui est arrivé en premier aux deux bornes d'entrée, et à déterminer que les signaux d'entrée sont arrivés simultanément aux deux bornes d'entrée; un circuit de commande de poste (32A,32B) servant à valider le circuit de porte (31A, 31B, 33) pour la borne sur laquelle le premier signal est arrivé, ou bien pour l'une prédéterminée desdites bornes, lorsque les deux signaux d'entrée sont arrivés simultanément, et à invalider l'autre circuit de porte, caractérisé en ce que le circuit comprend:

un circuit de discrimination du premier signal arrivé (36) comportant trois bornes d'entrée et une borne de sortie d'un signal, qui délivre un signal en réponse à des signaux présents auxdites trois bornes d'entrée, lesdites première et seconde bornes d'entrée étant raccordées respectivement auxdites deux bornes de réception;

une première bascule bistable (31A) comportant une entrée raccordée à une première desdites deux bornes de réception;

une seconde bascule bistable (31B) comportant une entrée accouplée à ladite borne de sortie du signal dudit circuit de discrimination du premier signal arrivé;

une porte OU (33) accouplée à des sorties desdites première et seconde bascules bistables (31A, 31B); et

des troisième et quatrième bascules bistables (32A, 32B) comportant des entrées raccordées respectivement à des sorties desdites première et seconde bascules bistables (31A, 31B), une sortie inverseuse (Q̄) de ladite troisième bascule bistable (32A) ramenant à l'état initial ladite seconde bascule bistable (31B) et une sortie inverseuse (Q̄) de ladite quatrième bascule bistable (32B) ramenant à l'état initial ladite première bascule bistable (31A) et étant raccordée à ladite troisième borne d'entrée dudit circuit de discrimination premier arrivé (36);

une sortie de ladite porte OU délivrant un signal de sortie (i) arrivant dudit circuit de préférence du premier signal arrivé (23).

5. Un circuit de préférence du premier signal arrivé (23) selon la revendication 4, dans lequel ledit circuit de discrimination du premier signal arrivé (36) comprend

une première porte ET (37), dont une entrée est raccordée à ladite première borne d'entrée et dont l'autre entrée est raccordée à ladite troisième borne d'entrée du circuit de discrimination du premier signal arrivé (36);

un inverseur (38) comportant une entrée raccordée à ladite seconde borne d'entrée du circuit de discrimination du premier signal arrivé (36);

une seconde porte ET (39) comportant une première entrée inverseuse raccordée à une sortie de ladite première porte ET (37) et une seconde entrée inverseuse raccordée à une sortie dudit inverseur (38) et possédant une sortie raccordée à ladite borne de sortie dudit circuit de discrimination du premier signal arrivé (36).

FIG. 1

FIG.2

FIG.3

FIG.4